Europäisches Patentamt

European Patent Office

Office européen des brevets

(11) Veröffentlichungsnummer: **0 417 529 A2**

## (12) EUROPÄISCHE PATENTANMELDUNG

(21) Anmeldenummer: **90116297.4**

(51) Int. Cl.⁵: **B23B 31/177**

(22) Anmeldetag: **25.08.90**

(30) Priorität: **14.09.89 DE 3930690**

(43) Veröffentlichungstag der Anmeldung:
**20.03.91 Patentblatt 91/12**

(84) Benannte Vertragsstaaten:
**AT FR GB IT**

(71) Anmelder: **Paul Forkardt GmbH & Co. KG**
**Rosenstrasse 44-46**
**W-4000 Düsseldorf 30(DE)**

(72) Erfinder: **Grund, Gerhard, Dipl.-Ing-**

Ernst-Lemmer-Strasse 68
**W-4000 Düsseldorf 13(DE)**
Erfinder: **Kempken, Rainer**
**Donaustrasse 3**
**W-4006 Erkrath(DE)**

(74) Vertreter: **Patentanwälte Dipl.-Ing. Alex**
**Stenger Dipl.-Ing. Wolfram Watzke Dipl.-Ing.**
**Heinz J. Ring**
**Kaiser-Friedrich-Ring 70**
**W-4000 Düsseldorf 11(DE)**

(54) **Spannfutter.**

(57) Die Erfindung betrifft ein Spannfutter zum Einspannen von Werkstücken oder Werkzeugen mit einem Futterkörper 1 und mindestens zwei radial beweglich im Futterkörper 1 geführten Spannbacken 5, die über Keilflächen 5a,5b von einem axial beweglich angetriebenen Futterkolben antreibbar sind. Um ein kompaktes und fliehkraftunempfindliches Spannfutter zu schaffen, ist der Futterkolben als geschlossener, mit seiner äußeren Mantelfläche auf dem gesamten Umfang in einer Bohrung 1a des Futterkörpers 1 geführter Ringkolben 6 ausgebildet, an dessen Mantelfläche im vorderen Bereich eine der Anzahl der Spannbacken 5 entsprechende Zahl von tangential verlaufenden Keilflächen 6a ausgebildet ist, die mit entsprechend ausgebildeten Gegenflächen 5a der Spannbacken 5 zusammenwirken. Eine besonders kurze axiale Baulänge ergibt sich, wenn konzentrisch zum Ringkolben 6 im Futterkörper 1 ein zweiter, gegenläufig angetriebener Ringkolben 8 angeordnet ist, der ebenfalls mit tangential verlaufenden Keilflächen 8a für die mit entsprechenden Gegenflächen 5b versehenen Spannbacken 5 ausgebildet ist.

*Fig. 2*

## SPANNFUTTER

Die Erfindung betrifft ein Spannfutter zum Einspannen von Werkstücken oder Werkzeugen mit einem Futterkörper und mindestens zwei radial beweglich im Futterkörper geführten Spannbacken, die über Keilflächen von einem axial beweglich angetriebenen futterkolben antreibbar sind.

Derartige Spannfutter sind in einer Vielzahl von Ausführungen bekannt, vgl. z.B. DE-PS 29 03 904, DE-AS 1 301 689. Die zum Antrieb der Spannfutter durch den Futterkolben erforderlichen Keilflächen sind üblicherweise als sogenannte Keilhaken ausgebildet, die am radial innen liegenden Ende der Spannbacken ausgeführt sind und in entsprechende Keilnuten des in einer zentralen Bohrung des Futterkörpers axial beweglichen Futterkolbens angreifen. Derartige Spannfutter haben sich in der Praxis bewährt, sind jedoch Verformungen durch Fliehkrafteinflüsse unterworfen, wenn die Spannfutter mit sehr hohen Drehzahlen betrieben werden.

Die Erfindung liegt die **Aufgabe** zugrunde, ein Spannfutter der eingangs beschriebenen Art zu schaffen, das bei kompakter Ausbildung eine sehr formstabile, steife Konstruktion besitzt, um auch gegenüber den bei hohen Drehzahlen auftretenden Fliehkrafteinflüssen unempfindlich zu sein. Bei möglichst kurzer axialer Saulänge soll es schließlich möglich sein, das Spannfutter auch mit kleinsten Außendurchmessern herzustellen und dennoch mit einer großen Mittenbohrung, insbesondere zur Zufuhr von Werkstücken oder Werkzeugen zu versehen.

Die **Lösung** dieser Aufgabenstellung durch die Erfindung ist dadurch gekennzeichnet, daß der futterkolben als geschlossener, mit seiner äußeren Mantelfläche auf dem gesamten Umfang in einer Bohrung des Futterkörpers geführter Ringkolben ausgebildet ist, an dessen Mantelfläche im vorderen Bereich eine der Anzahl der Spannbacken entsprechende Zahl von tangential verlaufenden Keilflächen ausgebildet ist, die mit entsprechend ausgebildeten Gegenflächen der Spannbacken zusammenwirken.

Da der dem Antrieb der Spannbacken dienende Futterkolben als geschlossener Ringkolben ausgebildet ist und sich auf seiner gesamten äußeren Mantelfläche unmittelbar im Futterkörper abstützt, der in diesem Bereich ebenfalls als geschlossener Ring ausgeführt ist, ergibt sich ein sehr steifer und von Fliehkrafteinflüssen nahezu unbeeinflußter Antrieb der Spannbacken, so daß in Verbindung mit der sich hieraus ergebenden direkten Abstützung der Gegenflächen der Spannbacken über den Ringkolben am ringförmigen Futterkörper eine sehr steife Konstruktion erreicht wird, die gegenüber fliehkrafteinflüssen unempfindlich ist, so daß die Drehzahl derartiger erfindungsgemäßer Spannfutter sehr hoch liegen kann. Durch die erfindungsgemäße Ausbildung des Spannbackenantriebes kann das Spannfutter auch mit kleinsten Außendurchmessern hergestellt und dennoch mit einer verhältnismäßig großen Mittenbohrung für Werkstücke versehen werden, da der zentrale Bereich des Futterkörpers nicht mehr für einen Futterkolben freigehalten werden muß.

Gemäß einem weiteren Merkmal der Erfindung sind die mit den Keilflächen des Ringkolbens zusammenwirkenden Gegenflächen an der Rückseite der Spannbacken ausgebildet. Hierdurch ergibt sich eine besonders kompakte und mit hohen Kräften belastbare Konstruktion.

Um eine Rückstellung der in radial nach außen oder radial nach innen verlaufender Spannrichtung bewegten Spannbacken zu erzielen, sind diese erfindungsgemäß durch eine der vom Ringkolben bewirkten Verstellbewegung entgegengesetzte Rückstellkraft belastet. Hierbei kann es sich vorzugsweise um geeignete Federn oder auch um Hebelmechanismen handeln.

Um ein für Außen- und Innenspannungen geeignetes Spannfutter mit besonders kurzer axialer Baulänge zu schaffen, wird in Weiterbildung der Erfindung vorgeschlagen, im Futterkörper einen zweiten, gegenläufig angetriebenen Ringkolben konzentrisch zum Ringkolben anzuordnen, der ebenfalls mit tangential verlaufenden Keilflächen für die mit entsprechenden Gegenflächen versehenen Spannbacken ausgebildet ist. Die beiden gegenläufig angetriebenen Ringkolben können wahlweise für eine Außen- bzw. Innenspannung verwendet werden, wobei der jeweils andere Ringkolben die Rückstellung der Spannbacken bewirkt.

Bei einer bevorzugten Ausführungsform der Erfindung sind die beiden Ringkolben gegenläufig durch ein Druckmittel angetrieben, wozu der Futterkörper mit entsprechenden Druckräumen und Anschlußkanälen versehen ist.

Auf der Zeichnung ist ein Ausführungsbeispiel des erfindungsgemäßen Spannfutters dargestellt, und zwar zeigen:

Fig. 1 eine Stirnansicht eines Drei-Backen-Futters,

Fig. 2 einen Längsschnitt gemäß der Schnittlinie II-II in Fig. 1 und

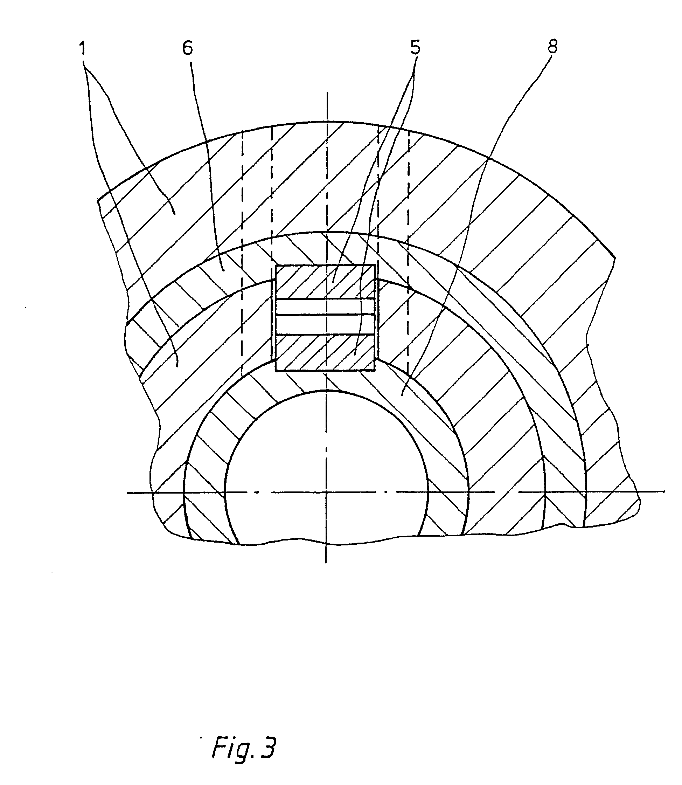

Fig. 3 einen Teilschnitt gemäß der Schnittlinie III-III in Fig. 2.

Das als Drei-Backen-Futter ausgebildete Spannfutter besitzt einen ringförmigen Futterkörper 1, der an seiner Rückseite durch einen Deckel 2 verschlossen ist und mittels Futterbefestigungsschrauben 3 am vorderen Flansch 4a einer gestrichelt angedeuteten Spindel 4 befestigt ist. Der Deckel 2 ist durch Schrauben 2a flüssigkeitsdicht an den Futterkörper 1 angeschraubt.

In bekannter Weise sind beim Ausführungsbeispiel drei Spannbacken 5, die als einteilige Backen dargestellt sind, aber auch mehrteilig ausgeführt sein können, in radialer Richtung beweglich im Futterkörper 1 geführt. Weiterhin ist im Futterkörper 1 eine ringförmige Aussparung 1a ausgebildet, in der ein Ringkolben 6 in axialer Richtung beweglich angeordnet ist. Die Verschiebung dieses Ringkolbens 6 erfolgt mit Hilfe eines Druckmittels, vorzugsweise Hydraulikflüssigkeit, die der Aussparung 1a wahlweise durch einen Anschlußkanal 7a oder 7b zugeführt wird. Das Druckmittel gelangt somit wahlweise auf eine der beiden ringförmigen Stirnflächen des Ringkolbens 6, der durch entsprechende Dichtringe gegenüber dem Futterkörper 1 abgedichtet ist.

Der Ringkolben 6, der als geschlossener Ring ausgeführt ist, stützt sich mit seiner äußeren Mantelfläche auf dem gesamten Umfang in der durch eine Bohrung hergestellten Aussparung 1a des Futterkörpers 1 ab. Er ist im vorderen Bereich mit einer der Anzahl der Spannbacken 5 entsprechenden Zahl von tangential verlaufenden Keilflächen 6a ausgebildet, die mit entsprechend ausgebildeten Gegenflächen 5a der jeweiligen Spannbacke 5 zusammenwirken. Eine axiale Bewegung des Ringkolbens 6 hat demzufolge eine radiale Verstellbewegung der ausschließlich radial verschiebbar im Futterkörper 1 geführten Spannbacken 5 zur Folge.

Konzentrisch zum Ringkolben 6 ist in einer weiteren Aussparung 1b des Futterkörpers 1 ein zweiter Ringkolben 8 ebenfalls axial verschiebbar gelagert, dessen kreisringförmige Kolbenflächen wiederum über Anschlußkanäle 9a,9b mit Druckmittel beaufschlagt werden können. Auch dieser Ringkolben 8 ist durch Dichtringe einerseits gegenüber dem Futterkörper 1 und andererseits gegenüber einem ringförmigen Kragen 2b des Deckels 2 abgedichtet. Auch der Ringkolben 8 ist mit einer der Anzahl der Spannbacken 5 entsprechenden Zahl von tangential verlaufenden Keilflächen 8a versehen, die mit entsprechend ausgebildeten Gegenflächen 5b der Spannbacken 5 zusammenwirken. Durch die konzentrische Anordnung der beiden Ringkolben 6 und 8 innerhalb des Futterkörpers 1 ergibt sich eine sehr kurze axiale Saulänge des gesamten Spannfutters, obwohl dieses für Außen- und Innenspannungen verwendet werden kann.

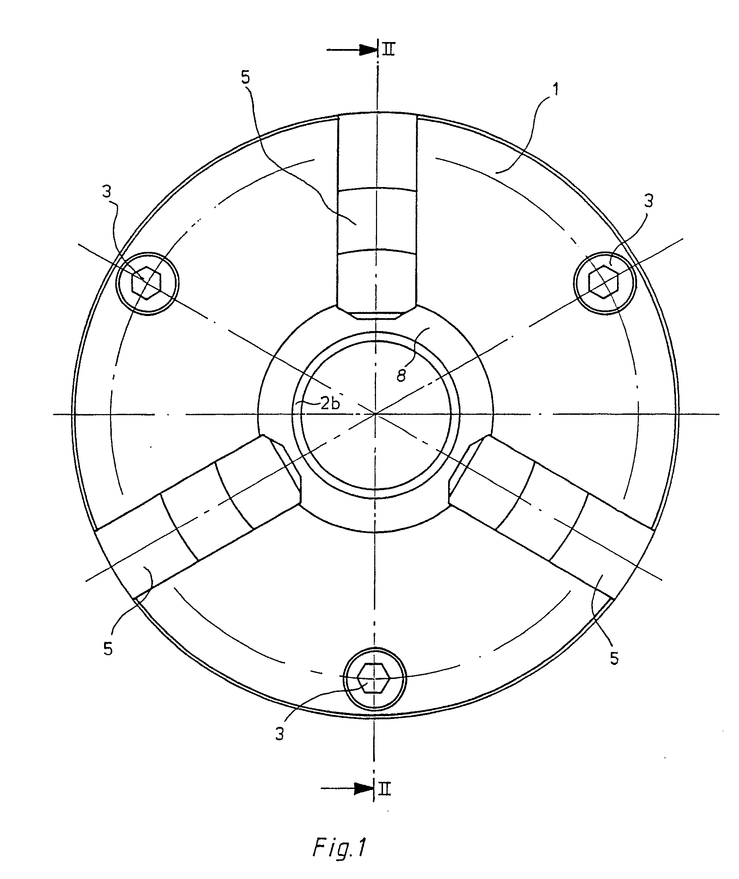

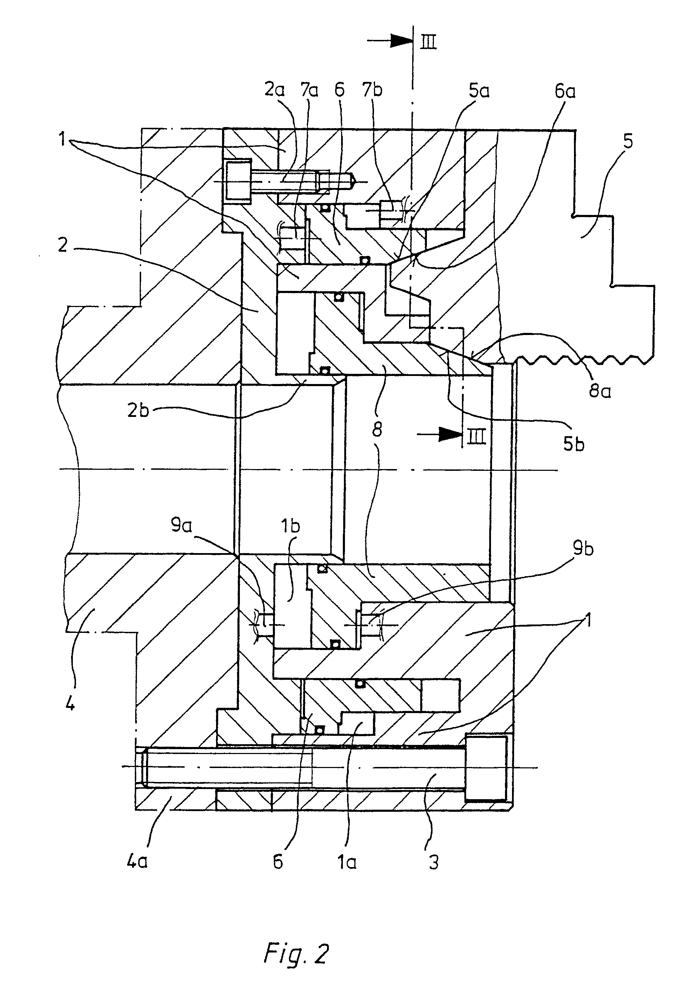

Wenn beispielsweise ein Werkstück zwischen den drei Spannbacken 5 des Spannfutters eingespannt werden soll, wird die in Figur 2 links liegende Ringfläche des Ringkolbens 6 über den Anschlußkanal 7a mit Druckmittel beaufschlagt. Der Anschlußkanal 7b ist hierbei ebenso drucklos wie der Anschlußkanal 9a für den Ringkolben 8. Durch die Druckbeaufschlagung der in Figur 1 links liegenden Kolbenfläche wird der Ringkolben 6 in Figur 2 nach rechts verschoben. Seine Keilfläche 6a bewirkt hierbei über die Gegenfläche 5a der Spannbacken 5 eine Verlagerung dieser Spannbacken 5 radial nach innen. Der innere Ringkolbens 8 wird durch eine gleichzeitige Beaufschlagung über den Anschlußkanal 9b nach links verschoben.

Zum Entspannen des Werkstückes bzw. zur Ausführung einer Innenspannung wird dagegen die in Figur 2 links liegende Ringfläche des Ringkolbens 8 über den Anschlußkanal 9a mit Druckmittel beaufschlagt; die Anschlußkanäle 9b sowie 7a sind drucklos. In diesem Fall drückt der Ringkolben 8 die Spannbacken 5 in radialer Richtung nach außen, wobei gleichzeitig eine in Figur 2 nach links gerichtete, durch Beaufschlagung über den Anschlußkanal 7b bewirkte Rückzugbewegung des Ringkolbens 6 erfolgt. Beide Ringkolben 6 und 8 arbeiten demzufolge stets gegenläufig und können somit zur erforderlichen Rückstellung der Spannbacken 5 unabhängig von der zuvor ausgeführten Spannbewegung verwendet werden.

## Bezugsziffernliste

1 Futterkörper
1a Aussparung
1b Aussparung
2 Deckel
2a Schraube
2b Kragen
3 Futterbefestigungsschraube
4 Spindel
4a Flansch
5 Spannbacke
5a Gegenfläche
5b Gegenfläche
6 Ringkolben
6a Keilfläche
7a Anschlußkanal
7b Anschlußkanal
8 Ringkolben
8a Keilfläche
9a Anschlußkanal
9b Anschlußkanal

## Ansprüche

1. Spannfutter zum Einspannen von Werkstücken oder Werkzeugen mit einem Futterkörper und mindestens zwei radial beweglich im Futterkörper geführten Spannbacken, die über Keilflächen von einem axial beweglich angetriebenen Futterkolben antreibbar sind,

**dadurch gekennzeichnet,**
daß der Futterkolben als geschlossener, mit seiner äußeren Mantelfläche auf dem gesamten Umfang in einer Bohrung (1a) des Futterkörpers (1) geführter Ringkolben (6) ausgebildet ist, an dessen Mantelfläche im vorderen Bereich eine der Anzahl der Spannbacken (5) entsprechende Zahl von tangential verlaufenden Keilflächen (6a) ausgebildet ist, die mit entsprechend ausgebildeten Gegenflächen (5a) der Spannbacken (5) zusammenwirken.

2. Spannfutter nach Anspruch 1, dadurch gekennzeichnet, daß die Gegenflächen (5a) an der Rückseite der Spannbacke (5) ausgebildet sind.

3. Spannfutter nach Anspruch 1 oder 2, dadurch gekennzeichnet, daß die Spannbacken (5) durch eine der vom Ringkolben (6) bewirkten Verstellbewegung entgegengesetzte Rückstellkraft belastet sind.

4. Spannfutter nach mindestens einem der Ansprüche 1 bis 3, dadurch gekennzeichnet, daß konzentrisch zum Ringkolben (6) im Futterkörper (1) ein zweiter, gegenläufig angetriebener Ringkolben (8) angeordnet ist, der ebenfalls mit tangential verlaufenden Keilflächen (8a) für die mit entsprechenden Gegenflächen (Sb) versehenen Spannbacken (5) ausgebildet ist.

5. Spannfutter nach Anspruch 4, dadurch gekennzeichnet, daß die beiden Ringkolben (6,8) gegenläufig durch ein Druckmittel angetrieben sind und der Futterkörper (1) mit entsprechenden Druckräumen (1a,1b) und Anschlußkanälen (7a,7b,9a,9b) versehen ist.

*Fig.1*

Fig. 2

Fig. 3